# EUROPEAN PATENT APPLICATION

(11) **EP 0 840 420 A1**
(43) Date of publication of application: **06.05.1998**
(21) Application number: 97119043.4
(22) Date of filing: 31.10.1997
(51) Int. Cl.: H02G 9/10, G02B 6/44

(54) **Extension part for mounting bracket of cable closure**

(30) Priority: 01.11.1996 GB 9622764
(71) Applicant: N.V. RAYCHEM S.A., 3010 Kessel-Lo (BE)
(72) Inventor: Brants, Jos, 3360 Korbeek-Lo (BE); van Noten, Louis, 3000 Leuven (BE); Radelet, Chris, 3270 Scherpenheuvel (BE)
(74) Representative: Clayton, Anthony Nicholas

(57) **Abstract**

A kit of parts for slidably mounting a cable closure to a wall, comprising:
(a) a mounting bracket, comprising a first part which may be fixed to a wall, and a second part which, at least in use, is slidably attached to the first part and on which a cable closure may be mounted; and
(b) an extension part which may be removably attached to the first part of the mounting bracket such that the second part of the mounting bracket may slide from the first part to, and along, the extension part, thereby extending the distance by which the second part may slide with respect to the first part.

## Description

The present invention relates to cable closures for enclosing joints between cables, e.g. optical fibre telecommunications cables.

Cable closures are often located, in use, below ground level in a cavity, for example mounted to a wall of the cavity. For example, in one system, several cable closures (e.g. between two and four closures) are located in a cavity in the ground, each of the closures being individually mounted to a wall of the cavity. The mounting bracket for each closure comprises a first part which is fixed to a wall of the cavity, and a second part which is slidably attached to the first part and on which the closure is mounted. When an engineer first installs the cable closure, or if an engineer subsequently needs to work on the closure, the second part of the mounting bracket (with the closure attached) is raised out of the cavity (by sliding it with respect to the first part) so that the closure is accessible for the engineer to carry out his work. However, because the dimensions (and particularly the depth) of the cavity are limited, the length of the second part of the mounting bracket (i.e. the extendible length of the bracket) is also limited. Typically, a cable closure may be raised only about 25 to 50 cm above the cavity (i.e. above ground level). This is a very low and inconvenient height for an engineer who has to carry out time-consuming and skilled tasks on the cable closure. This problem is particularly acute when the closure is for optical fibre cables, since it is normally necessary for the engineer to carry out optical fibre splicing and organizing operations.

The inventors of the present invention have now devised a convenient and effective solution to this problem.

According to a first aspect, the invention provides a kit of parts for slidably mounting a cable closure to a wall, comprising:
(a) a mounting bracket, comprising a first part which may be fixed to a wall, and a second part which, at least in use, is slidably attached to the first part and on which a cable closure may be mounted; and
(b) an extension part which may be removably attached to the first part of the mounting bracket such that the second part of the mounting bracket may slide from the first part to, and along, the extension part, thereby extending the distance by which the second part may slide with respect to the first part.

The extension part of the kit may be regarded as a tool for the engineer to enable him, for example, to raise a closure to a greater height above ground level so that it may be worked on more conveniently. The engineer may, for example, carry the extension part with him as he travels from one closure location to another, or each underground cavity may contain an extension part for an engineer to use for closures in that cavity as and when required.

For the avoidance of doubt, when it is stated in this specification that the second part of the mounting bracket may slide with respect to the first part and the extension part, this includes the possibility that the sliding may be assisted by means of rollers or ball bearings or the like.

The first part of the mounting bracket preferably includes at least one channel and/or at least one rail with which, at least in use, the second part of the mounting bracket is slidably engaged.

The extension part preferably includes at least one channel and/or at least one rail with which the second part of the mounting bracket may slidably engage when the extension part is attached to the first part of the mounting bracket.

According to a second aspect, the invention provides an extension part for removable attachment to a mounting bracket which mounts a cable closure to a wall, the mounting bracket comprising a first part which is fixed to the wall, and a second part which is slidably attached to the first part and on which the cable closure is mounted, the extension part comprising:
(a) attachment means to enable the extension part to be removably attached to the first part of the mounting bracket; and
(b) at least one channel and/or at least one rail to enable the second part of the mounting bracket to slide from the first part of the mounting bracket to, and along, the extension part by slidably engaging the extension part when, in use, the extension part is attached to the first part, thereby extending the distance by which the second part may slide with respect to the first part.

Advantageously, the first part of the mounting bracket and/or the extension part may include a single channel, side edges of which protrude laterally inwards, thereby to retain the second part of the mounting bracket in the channel.

The extension part is preferably elongate in shape. Preferably the extension part extends the distance by which the second part of the mounting bracket may slide with respect to the first part of the mounting bracket by at least 30 cm, preferably at least 50 cm, e.g. about 70 cm. For example, the or each channel and/or rail of the extension part preferably has a length of at least 50 cm, more preferably at least 70 cm, e.g. about 87 cm.

In order to enable the extension part to be removably attached to the first part of the mounting bracket, the extension part preferably includes at least one, more preferably two, attachment member(s) extending from a main body of the extension part (e.g. extending from one or more rails and/or channels of the extension part).

According to a third aspect, the invention provides the use of a kit according to the first aspect of the invention, or the use of an extension part according to the second aspect of the invention, to move a cable closure from a stored position to a more accessible position, which cable closure is attached to the second part of the mounting bracket, the use comprising:
(a) removably attaching the extension part to the first part of the mounting bracket; and
(b) sliding the second part of the mounting bracket and the cable closure mounted thereto from the first part to, and along, the extension part until the cable closure is in its more accessible position.

According to a fourth aspect, the invention provides a method of moving a cable closure from a stored position to a more accessible position, which cable closure, in its stored position, is attached to a mounting bracket comprising a first part which is fixed to a wall, and a second part which is slidably attached to the first part and on which the cable closure is mounted, the method comprising:
(a) providing an extension part for the mounting bracket;
(b) removably attaching the extension part to the first part of the mounting bracket; and
(c) sliding the second part of the mounting bracket and the cable closure mounted thereto from the first part to, and along, the extension part until the cable closure is in its more accessible position.

The invention will now be described, by way of example, with reference to the accompanying drawings, of which:
Figure 1A shows a mounting bracket;
Figure 1B shows an extension part according to the invention;
Figures 2A-2C show the attachment of an extension part to a first part of a mounting bracket, and the sliding of a second part of the mounting bracket onto, and along, the extension part;
Figure 3A shows a cable closure attached to a mounting bracket which is mounted to a wall of a box; and
Figure 3B shows the cable closure of Figure 3A being raised out of the box on an extension part according to the invention.

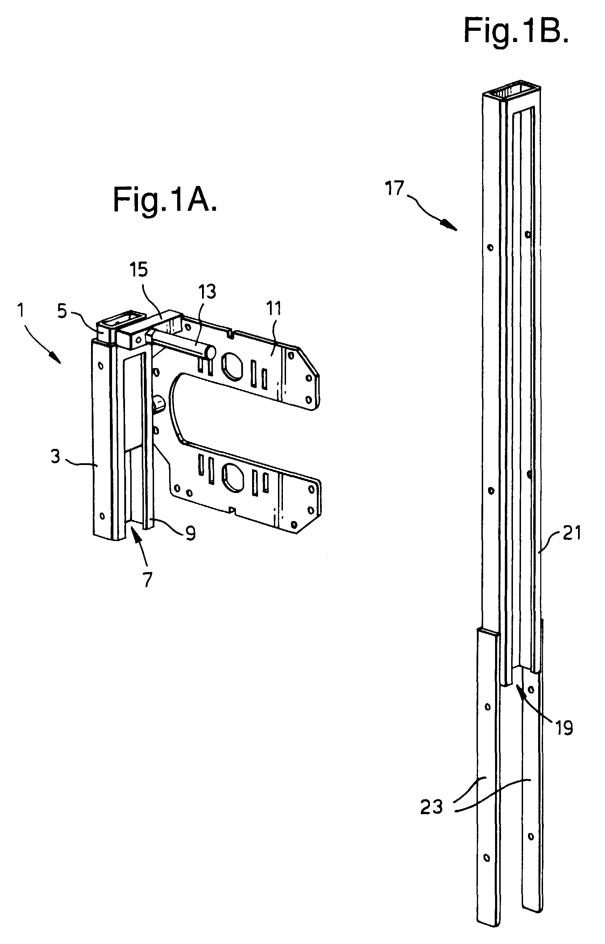

Figure 1A shows a mounting bracket 1, comprising a first part 3 which may be fixed to a wall of a cavity in the ground, and a second part 5 which is slidably attached to the first part 3. The first part 3 has a single channel 7 which has side edges 9 which protrude laterally inwards to retain the second part 5 in the channel. The second part 5 comprises a hollow generally rectangular cross-section portion which has a support part 11 on which a cable closure may be mounted, and a handle 13 to help raise and lower it. A part 15 to which the handle 13 and the support part 11 are attached is rotatably attached to the rectangular cross-section portion of the second part 5, in order to enable a cable closure to be rotated into the most convenient orientation.

Figure 1B shows an extension part 17 according to the invention. The extension part 17 is elongate in shape, and is hollow with a generally rectangular cross-section. It has a single channel 19 which has side edges 21 which protrude laterally inwards to retain the second part 5 of the mounting bracket in the channel. The shape and dimensions of the channel 19 and the side edges 21 are substantially identical to those of the first part 3 of the mounting bracket 1, to ensure that the second part 5 of the mounting bracket may slide smoothly between the first part 3 and the extension part 17. The extension part 17 also has a pair of attachment members 23 extending from its main body (which contains the channel 19), to enable it to be attached to the first part 3 of the mounting bracket 1. The attachment members 23 may overlap the first part 3, and attachment may be effected by means of pins, screws, or bolts etc.

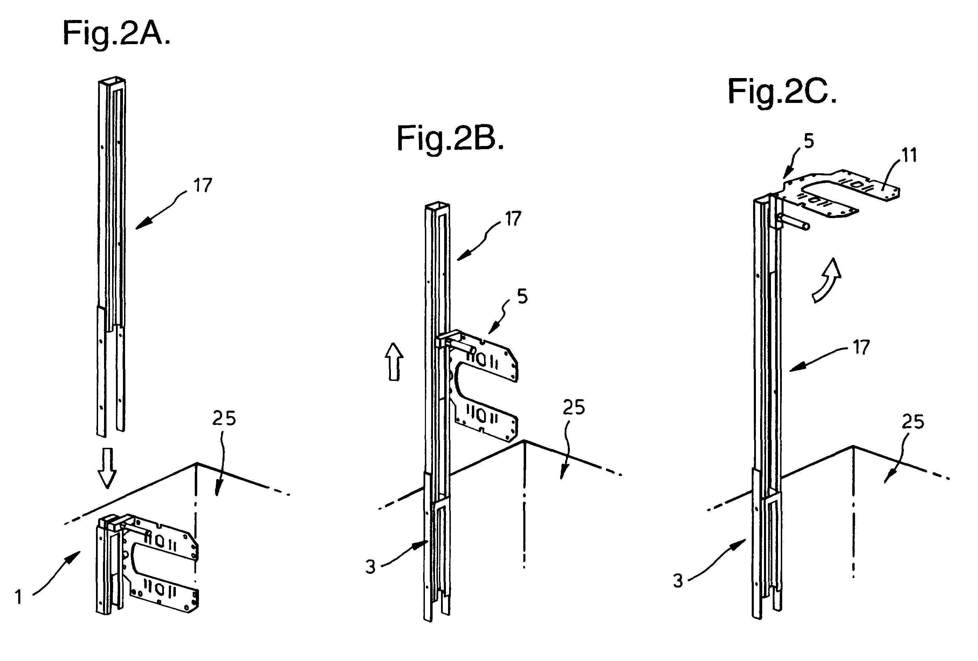

Figure 2A shows the extension part 17 being attached to the first part 3 of the mounting bracket 1, so that the extension part extends above the mounting bracket out of a cavity 25 in which the mounting bracket is mounted. In Figure 2B, the second part 5 of the mounting bracket is being slid up towards the top of the extension part 17. In Figure 2C, the second part 5 is secured at the top of the extension part 17 (for example by means of pins, screws or bolts), and the support part 11 has been rotated through 90°.

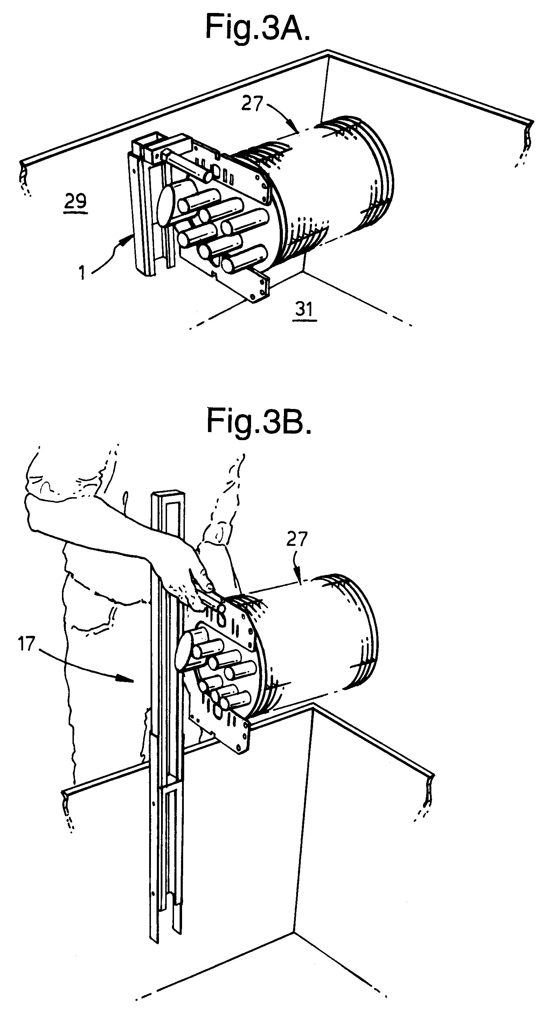

Figure 3A shows a base-and-dome (butt splice) cable closure 27 mounted to a wall 29 of a box 31 (the box is intended to represent a cavity below ground level) by means of a mounting bracket 1. In Figure 3B an extension part 17 has been attached to the mounting bracket 1, and the cable closure 27 is being manually raised out of the box.

## Claims

1. A kit of parts for slidably mounting a cable closure to a wall, comprising:
(a) a mounting bracket, comprising a first part which may be fixed to a wall, and a second part which, at least in use, is slidably attached to the first part and on which a cable closure may be mounted; and
(b) an extension part which may be removably attached to the first part of the mounting bracket such that the second part of the mounting bracket may slide from the first part to, and along, the extension part, thereby extending the distance by which the second part may slide with respect to the first part.

2. A kit according to Claim 1, in which the first part of the mounting bracket includes at least one channel and/or at least one rail with which, at least in use, the second part of the mounting bracket is slidably engaged.

3. A kit according to Claim 1 or Claim 2, in which the extension part includes at least one channel and/or at least one rail with which the second part of the mounting bracket may slidably engage when the extension part is attached to the first part of the mounting bracket.

4. A kit according to Claim 3, in which the or each channel and/or rail of the extension part has a length of at least 50cm, preferably at least 70cm, e.g. about 87cm.

5. A kit according to any one of claims 2 to 4, in which the first part of the mounting bracket and/or the extension part include(s) a single channel, side edges of which protrude laterally inwards, thereby to retain the second part of the mounting bracket in the channel.

6. A kit according to any preceding claim, in which the extension part is elongate.

7. A kit according to any preceding claim, in which the extension part includes at least one, preferably two, attachment member(s) extending from a main body of the extension part, to enable the extension part to be removably attached to the first part of the mounting bracket.

8. A kit according to any preceding claim, further comprising a cable closure which, at least in use, is mounted on the second part of the mounting bracket.

9. An extension part for removable attachment to a mounting bracket which mounts a cable closure to a wall, the mounting bracket comprising a first part which is fixed to the wall, and a second part which is slidably attached to the first part and on which the cable closure is mounted, the extension part comprising:
(a) attachment means to enable the extension part to be removably attached to the first part of the mounting bracket; and
(b) at least one channel and/or at least one rail to enable the second part of the mounting bracket to slide from the first part of the mounting bracket to, and along, the extension part by slidably engaging the extension part when, in use, the extension part is attached to the first part, thereby extending the distance by which the second part may slide with respect to the first part.

10. An extension part according to Claim 9, in which the attachment means comprises at least one, preferably two, attachment member(s) extending from a main body of the extension part.

11. An extension part according to Claim 9 or Claim 10, which includes a single channel, side edges of which protrude laterally inwards, thereby to retain the second part of the mounting bracket in the channel.

12. An extension part according to any one of claims 9 to 11, which is elongate.

13. An extension part according to any one of claims 9 to 12, in which the or each channel and/or rail has a length of at least 50cm, preferably at least 70cm, e.g. about 87cm.

14. The use of a kit according to any one of claims 1 to 8, or an extension part according to any one of claims 9 to 13, to move a cable closure from a stored position to a more accessible position, which cable closure is attached to the second pan of the mounting bracket, the use comprising:
(a) removably attaching the extension part to the first part of the mounting bracket; and
(b) sliding the second part of the mounting bracket and the cable closure mounted thereto from the first part to, and along, the extension part until the cable closure is in its more accessible position.

15. A method of moving a cable closure from a stored position to a more accessible position, which cable closure, in its stored position, is attached to a mounting bracket comprising a first part which is fixed to a wall, and a second part which is slidably attached to the first part and on which the cable closure is mounted, the method comprising:
(a) providing an extension part for the mounting bracket;
(b) removably attaching the extension part to the first part of the mounting bracket; and
(c) sliding the second part of the mounting bracket and the cable closure mounted there to from the first part to, and along, the extension part until the cable closure is in its more accessible position.
